# EUROPÄISCHE PATENTANMELDUNG

(11) **EP 0 628 372 A1**
(43) Veröffentlichungstag der Anmeldung: **14.12.1994**
(21) Anmeldenummer: 93107108.8
(22) Anmeldetag: 01.05.1993
(51) Int. Cl.: B23K 11/31, F15B 15/14

(54) **Kolben-Zylinder-Anordnung als Antrieb für Schweissvorrichtungen**

(71) Anmelder: LIV AUTOMATION GMBH, D-51107 Köln (DE)
(72) Erfinder: Ermert, Willi, W-5240 Betzdorf-Bruche (DE)

(57) **Zusammenfassung**

Kolben-Zylinder-Anordnung als Antrieb, insbesondere für Schweißvorrichtungen, bestehend aus zwei konzentrisch zueinander angeordneten Zylinderräumen (31, 9, 12), in denen ein Kolben (6) und ein Vorkolben (10) verschiebbar geführt sind. In Abhängigkeit von der Stellung des Vorkolbens (10) wird ein Überströmventil (10, 15, 21, 27) geöffnet, so daß ein Druckmedium vom inneren, dem Vorkolben (10) zugeordneten Vordruckraum (9, 12) in den äußeren, dem Kolben (6) zugeordneten Hauptdruckraum (31), strömen kann, wobei das Überströmventil (10, 15, 21, 27) konzentrisch zum Vorkolben (10) innerhalb desselben ausgebildet ist.

## Beschreibung

Die vorliegende Erfindung betrifft eine Kolben-Zylinder-Anordnung als Antrieb, insbesondere für Schweißvorrichtungen.

Eine derartige Kolben-Zylinder-Anordnung ist aus der deutschen Patentanmeldung P 41 36 487.2 bekannt. Diese Kolben-Zylinder-Anordnung hat sich an sich bewährt. Jedoch ist die Ausbildung und Anordnung des Überströmventils bei dieser Anordnung relativ herstellungsaufwendig und somit kostenintensiv.

Der vorliegenden Erfindung liegt die Aufgabe zugrunde, diese bekannte Kolben-Zylinder-Anordnung dahingehend zu verbessern, daß das Überströmventil einfacher in der Herstellung ist und eine kompaktere Ausführungsform der Kolben-Zylinder-Anordnung ermöglicht.

Erfindungsgemäß wird dies mit einer Kolben-Zylinder-Anordnung der eingangs beschriebenen Art erreicht, bestehend aus zwei konzentrisch zueinander angeordneten Zylinderräumen, in denen ein Kolben und ein Vorkolben verschiebbar geführt sind, und wobei in Abhängigkeit von der Stellung des Vorkolbens ein Überströmventil geöffnet wird, so daß ein Druckmedium vom inneren, dem Vorkolben zugeordneten Druckraum in den äußeren, dem Kolben zugeordneten Hauptdruckraum strömen kann, wobei das Überströmventil konzentrisch zum Vorkolben innerhalb desselben ausgebildet ist. Bei dieser erfindungsgemäßen Ausführungsform bildet der Vorkolben selbst einen Teil des Überströmventils, so daß ein Überströmventil als separates Bauteil entfällt. Hierdurch wird die konzentrische Anordnung des Überströmventils zum Vorkolben ermöglicht, wobei die die Ventilfunktion ausführenden Bauteile innerhalb des Vorkolbens selbst sich befinden können. Hierdurch werden die Herstellkosten wesentlich reduziert und es ergibt sich eine kompaktere Bauform, so daß der erforderliche Einbauraum für die erfindungsgemäße Kolben-Zylinder-Anordnung wesentlich reduziert wird.

Vorteilhafte Ausführungsformen der Erfindung sind in den Unteransprüchen enthalten.

Anhand der in den beiliegenden Zeichnungen dargestellten Ausführungsbeispiele wird die Erfindung näher erläutert. Es zeigen:
- Fig. 1: einen Schnitt durch eine erste Ausführungsform einer erfindungsgemäßen Kolben-Zylinder-Anordnung,
- Fig. 2: einen Schnitt durch eine weitere Ausführungsform einer erfindungsgemäßen Kolben-Zylinder-Anordnung.

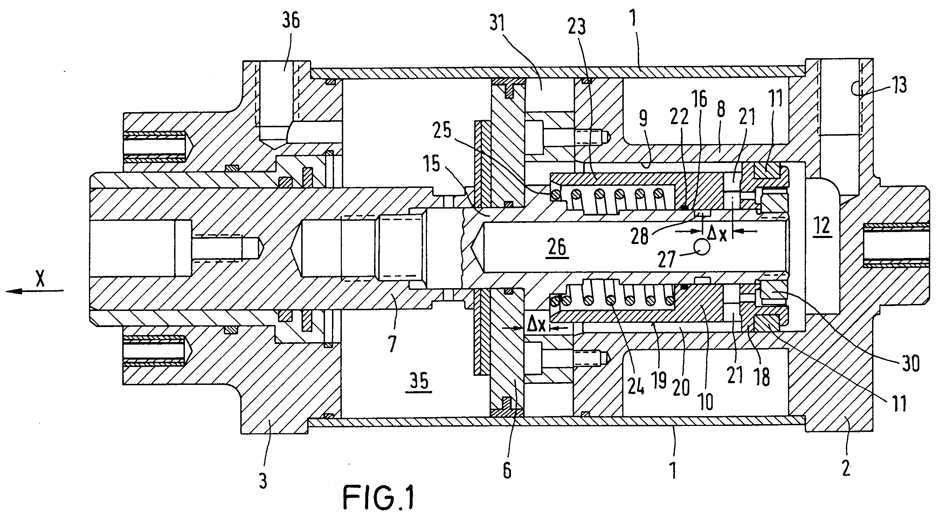

Wie sich aus Fig. 1 ergibt, besteht eine erfindungsgemäße Kolben-Zylinder-Anordnung aus einem Zylinder mit einem mittleren Zylinderrohr 1, das einseitig durch einen Zylinderdeckel 2 und anderseitig durch einen Zylinderboden 3 verschlossen ist. Hierbei sind der Zylinderdeckel 2 und der Zylinderboden 3 durch seitlich an der Außenseite des Zylinderrohres 1 verlaufende Zuganker miteinander verschraubt und verspannt, was jedoch nicht zu erkennen ist. Innerhalb des Zylinderrohres 1 ist ein Kolben 6 verschiebbar und umfangsgemäß abgedichtet geführt. Der Kolben 6 weist eine mittige, auf dem Kolben angeordnete Kolbenstange 7 auf, die durch den Zylinderboden 3 verläuft und in diesem umfangsgemäß abgedichtet, gleitend geführt ist. Die Kolbenstange 7 dient z.B. bei der Verwendung der erfindungsgemäßen Kolben-Zylinder-Anordnung in Schweißanordnungen zur Betätigung der Schweißelektroden beispielsweise von Roboter-Schweißzangen. Erfindungsgemäß ist nun vorgesehen, daß der Zylinderdeckel 2 einen konzentrisch zum Zylinderrohr 1 angeordneten, inneren Zylinderansatz 8 aufweist, der in den Zylinderrohr-Innenraum hineinragt. Dieser Zylinderansatz 8 weist eine mittlere zylindrische Führungsbohrung 9 auf. Diese mittige, zylindrische Führungsbohrung 9 bildet einen inneren Druckraum zur Erzeugung einer ersten Druckstufe. Hierzu ist in der zylindrischen Bohrung 9 ein Vorkolben 10 verschiebbar geführt und umfangsgemäß durch eine Ringdichtung 11 gegen die Innenwandung der Bohrung 9 abgedichtet. In Fig. 1 ist die Anfangslage des Vorkolbens 10 dargestellt. Wie sich hieraus ergibt, befindet sich zwischen der dem Zylinderdeckel 2 zugekehrten Seite des Vorkolbens 10 und dem Zylinderdeckel 2 ein Vordruckraum 12. Dieser Vordruckraum 12 ist teilweise durch eine Ausnehmung im Zylinderdeckel 2 gebildet und ist über eine Durchgangsbohrung 13 im Zylinderdeckel 2 mit einer Druckleitung, nicht dargestellt, zum Zuführen eines Druckmediums, insbesondere Luft verbindbar. Konzentrisch zum Vorkolben 10 verläuft durch diesen eine Führungsstange 15, wobei der Vorkolben 10 auf dieser Führungsstange 15 verschiebbar geführt ist, und zwar im Bereich eines inneren, zylindrischen Führungsabschnitt 16. Die Führungsstange 15 ist mit der Kolbenstange 7 z.B. schraubgemäß verbunden und verläuft zu diesem Zweck mittig durch den Kolben 6 hindurch. Der Außendurchmesser des Vorkolbens 10 ist im Führungsbereich 18 seitlich der Ringdichtung 11 größer als im sich daran in Richtung auf den Kolben 6 anschließenden Bereich 19 des Vorkolbens 10, so daß in diesem Bereich ein Umfangsringspalt 20 ausgebildet wird. In diesem Ringspalt 20 münden mehrere durch den Vorkolben 10 im Führungsabschnitt 16 verlaufende Radialbohrungen 21. Zwischen den Radialbohrungen 21 und dem dem Kolben 6 zugekehrten Ende des Führungsabschnittes 16 ist eine O-Ringdichtung 22 zwischen dem Vorkolben 10 und der Führungsstange 15 angeordnet. Innerhalb des Vorkolbens 10 ist in einem Zylinderbereich 23 eine Druckfeder 24 zwischen dem Führungsabschnitt 16 und einem Ringansatz 25 der Führungsstange 15 angeordnet. Weiterhin ist zu erkennen, daß zentrisch innerhalb der Führungsstange 15 eine zur Ausnehmung hin offene Innenbohrung 26 ausgebildet ist, die sich bis etwa in den Bereich des Kolbens 6 erstrecken kann. Ausgehend von der Innenbohrung 26 verlaufen in der Führungsstange 15 im Bereich zwischen der O-Ringdichtung 22 und den Radialbohrungen 21 ein oder mehrere Verbindungsbohrungen 27, die in einer Außenumfangsnut 28 der Führungsstange 15 münden. Der Mittenabstand zwischen den Mittelachsen der Radialbohrungen 21 und der Mittelebene der Außenumfangsnut 28 beträgt Δx, wobei Δx der Weg ist, um den der Vorkolben 10 auf der Führungsstange 15 entgegen einer von der Druckfeder 24 aufgebrachten Kraft in Richtung auf den Kolben 6 unter Druckbeaufschlagung verschoben werden kann. Die Breite der Außenumfangsnut 28 entspricht vorzugsweise dem Durchmesser der Radialbohrungen 21. Dementsprechend beträgt der Abstand zwischen dem dem Kolben 6 zugekehrten Ende des Vorkolbens 10 und dem Kolben 6 ebenfalls Δx. Als Anschlag für den Vorkolben 10 im Bereich des dem Zylinderdeckel 2 zugekehrten Ende der Führungsstange 15 dient z.B. eine auf die Führungsstange 15 aufgeschraubte Mutter 30. Der Umfangsringspalt 20 endet in einem Hauptdruckraum 31 auf der dem Vorkolben 10 zugekehrten Seite des Kolbens 6. Hierbei ist zu erkennen, daß die wirksame Druckfläche des Hauptdruckraumes 31 wesentlich größer ist als die des Vordruckraumes 12, dessen wirksame Fläche vom Durchmesser des Vorkolbens 10 bestimmt wird. Der Hauptdruckraum 31 umgibt konzentrisch den Vordruckraum 12.

Die Funktion der erfindungsgemäßen Kolben-Zylinder-Anordnung ist nun wie folgt:
Sobald das Druckmedium über die Durchgangsbohrung 13 in den Vordruckraum 12 gelangt ist, wirkt dieses auf den Vorkolben 10. Da die Druckfeder 24 zunächst als starre Verbindung wirkt, d.h. nicht komprimiert wird, wird der Vorkolben 10 zusammen mit der Führungsstange 15, dem Kolben 6 sowie der Kolbenstange 7 in Pfeilrichtung X verschoben. Dieser Verschiebeweg entspricht einem Anfangshub bis eine an der Kolbenstange 7 befestigte Schweißelektrode an einem zu verschweißenden Werkstück anliegt. Hierbei wird durch, mit verringerter Kraft durchgeführten Anfangshub erreicht, daß die Schweißelektrode relativ weich aufsetzt, so daß einerseits die Rückprallneigung wesentlich reduziert wird und andererseits hierdurch die Arbeitsgeräusche wesentlich vermindert werden. Somit wird gleichzeitig eine Schonung der Schweißelektrode erreicht und die Lebensdauer verlängert. Sobald diese Anlagestellung vorhanden ist, wird nunmehr der Vorkolben 10 unter Kompression der Druckfeder 24 verschoben, und zwar um den Weg Δx, so daß danach der Vorkolben 10 am Kolben 6 anliegt. Gleichzeitig liegen in dieser Stellung die Radialbohrungen 21 über der Außenumfangsnut 28, so daß der Ringspalt 20 mit dem Innenraum der Innenbohrung 26, die mit dem Druckmedium beaufschlagt ist, verbunden wird, und nunmehr das Druckmedium auch in den Hauptdruckraum 31 einfließen kann, so daß die gesamte Fläche des Kolbens 6 druckbeaufschlagt wird, wodurch der zum Schweißen erforderliche Schweißdruck bzw. die erforderliche Schweißkraft aufgebracht werden kann.

Die Zurückbewegung des Kolbens 6 aus seiner Arbeitsstellung in die in Fig. 1 dargestellte Ausgangsstellung erfolgt dadurch, daß ein zwischen dem Kolben 6 und dem Zylinderboden 3 vorhandener, die Kolbenstange 7 umfassender Druckraum 35 über eine Zufuhrleitung 36, die durch den Zylinderboden 3 verläuft, mit einem Druckmittel beaufschlagt wird, und gleichzeitig eine Entlüftung der Vor- und Hauptdruckräume 12, 31 erfolgt.

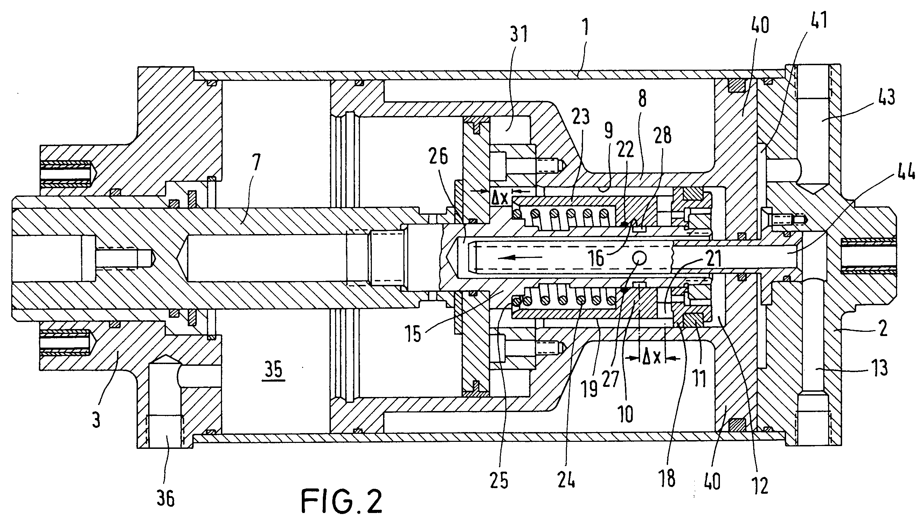

In Fig. 2 ist eine weitere Ausführungsform des erfindungsgemäßen Kolben-Zylinder-Anordnung dargestellt. Hierbei sind gleiche Teile wie in Fig. 1 mit denselben Bezugsziffern versehen. Bei dieser Ausführungsform befindet sich der Zylinderansatz 8 an einem Vorhubkolben 40, der im Zylinderrohr 1 verschiebbar geführt ist. Auf der von dem Zylinderansatz 8 abgekehrten Seite des Vorhubkolbens 40 ist der Zylinderdeckel 2 am Zylinderrohr 1 befestigt. Zwischen dem Zylinderdeckel 2 und dem Vorhubkolben 40 ist ein Vorhub-Druckraum 41 ausgebildet, der über eine Bohrung 43 durch den Zylinderdeckel 2 mit einer Anschlußleitung für ein Druckmedium verbunden ist. Weiterhin ist zu erkennen, daß konzentrisch am Zylinderdeckel 2 ein Tauchrohr 44 ausgebildet ist, das umfangsgemäß abgedichtet durch den Vorhubkolben 40 verläuft und in die Innenbohrung 26 hineinragt und insbesondere kurz vor dem Bohrungsgrund endet. Das Tauchrohr 44 ist mit der Durchgangsbohrung 13 für das Arbeitsdruck-Medium verbunden. Somit gelangt das Arbeitsdruck-Medium über das Tauchrohr 44 in den Vordruckraum 12. Durch die vorstehende Ausgestaltung kann zunächst, die gesamte am Vorhub-Kolben 40 befestigte erfindungsgemäße Kolben-Zylinder-Anordnung gemäß Fig. 1 um einen bestimmten Vorhub vorgeschoben werden, und zwar in Richtung auf die zu verschweißenden Teile. Dies ist insbesondere dann vorteilhaft, wenn ein großer Abstand zwischen der Schweißelektrode und den zu verschweißenden Teilen besteht. Sobald der Vorhub durchgeführt ist, wird der Arbeitshub, wie im obigen beschrieben, durchgeführt.

Die vorliegende erfindungsgemäße Kolben-Zylinder-Anordnung eignet sich auch zum Nachrüsten bekannter Schweißzylinder, da die erfindungsgemäße Konstruktion unmittelbar an der Kolbenstange ansetzt. Der wesentliche Vorteil der erfindungsgemäßen Ausführung liegt darin, daß die zu verschweißenden Bleche weniger deformiert und außerdem auch die Schweißelektroden geschont werden, so daß deren Lebensdauer erhöht wird. Darüber hinaus wird die Stärke der Arbeitsgeräusche wesentlich reduziert, so daß ohne weiteres die gesetzlichen Lärmschutzwerte eingehalten werden können.

## Patentansprüche

1. Kolben-Zylinder-Anordnung als Antrieb, insbesondere für Schweißvorrichtungen, bestehend aus zwei konzentrisch zueinander angeordneten Zylinderräumen (31, 9, 12), in denen ein Kolben (6) und ein Vorkolben (10) verschiebbar geführt sind und wobei in Abhängigkeit von der Stellung des Vorkolbens (10) ein Überströmventil (10, 15, 21, 27) geöffnet wird, so daß ein Druckmedium vom inneren, dem Vorkolben (10) zugeordneten Vordruckraum (9, 12) in den äußeren, dem Kolben (6) zugeordneten Hauptdruckraum (31) strömen kann,
**dadurch gekennzeichnet,** daß das Überströmventil (10, 15, 21, 27) konzentrisch zum Vorkolben (10) innerhalb desselben ausgebildet ist.

2. Kolben-Zylinder-Anordnung nach Anspruch 1,
**gekennzeichnet durch** ein mittleres Zylinderrohr (1), das einseitig durch einen Zylinderdeckel (2) und anderseitig durch einen Zylinderboden (3) verschlossen ist, wobei der Zylinderdeckel (2) einen konzentrisch zum Zylinderrohr (1) angeordneten, inneren Zylinderansatz (8) aufweist, in der eine zylindrische Bohrung (9) ausgebildet ist, in der ein Vorkolben (10) verschiebbar geführt und umfangsgemäß durch eine Ringdichtung (11) gegen die Innenwandung der Bohrung (9) abgedichtet ist.

3. Kolben-Zylinder-Anordnung nach Anspruch 1 oder 2,
**dadurch gekennzeichnet,** daß zwischen der dem Zylinderdeckel (2) zugekehrten Seite des Vorkolbens (10) und dem Zylinderdeckel (2) der Vordruckraum (12) ausgebildet ist, der insbesondere durch eine Ausnehmung im Zylinderdeckel (2) gebildet ist und über eine Durchgangsbohrung (13) im Zylinderdeckel (2) mit einer Druckleitung zum Zuführen eines Druckmediums verbunden ist.

4. Kolben-Zylinder-Anordnung nach einem der Ansprüche 1 bis 3,
**dadurch gekennzeichnet,** daß konzentrisch zum Vorkolben (10) durch diesen eine Führungsstange (15) verläuft, wobei der Vorkolben (10) auf der Führungsstange (15) verschiebbar in einem inneren zylindrischen Führungsabschnitt (16) geführt ist.

5. Kolben-Zylinder-Anordnung nach einem der Ansprüche 1 bis 4,
**dadurch gekennzeichnet,** daß die Führungsstange (15) mit der Kolbenstange (7) schraubgemäß verbunden ist und durch den Kolben (6) hindurch mittig verläuft.

6. Kolben-Zylinder-Anordnung nach einem der Ansprüche 1 bis 5,
**dadurch gekennzeichnet,** daß der Außendurchmesser des Vorkolbens (10) im Führungsbereich (18) seitlich der Ringdichtung (11) größer als im sich daran in Richtung auf den Kolben (6) anschließenden Bereich (19) des Vorkolbens (10) ist, so daß in diesem Bereich (19) ein Umfangsringspalt (20) ausgebildet wird.

7. Kolben-Zylinder-Anordnung nach einem der Ansprüche 1 bis 6,
**dadurch gekennzeichnet,** daß in den Ringspalt (20) mehrere, durch den Vorkolben (10) im Führungsabschnitt (16) verlaufende Radialbohrungen (21) münden.

8. Kolben-Zylinder-Anordnung nach einem der Ansprüche 1 bis 7,
**dadurch gekennzeichnet,** daß in der Führungsstange (15) eine zum Vordruckraum (12) hin offene Innenbohrung (26) ausgebildet ist, die sich vorzugsweise bis in den Bereich des Kolbens (6) erstreckt und wobei ausgehend von der Innenbohrung (26) in der Führungsstange (15) im Bereich des Führungsabschnittes (16) eine oder mehrere Verbindungsbohrungen (27) ausgebildet sind, die in eine Außenumfangsnut (28) der Führungsstange (15) münden.

9. Kolben-Zylinder-Anordnung nach Anspruch 8,
**dadurch gekennzeichnet,** daß der Mittenabstand zwischen den Mittelachsen der Radialbohrungen (21) und der Mittelebene der Außenumfangsnut (28) einem Verschiebeweg Δx entspricht, um den der Vorkolben (10) auf der Führungsstange (15) entgegen einer Federkraft in Richtung auf den Kolben (6) unter Druckbeaufschlagung verschoben werden kann.

10. Kolben-Zylinder-Anordnung nach einem der Ansprüche 1 bis 9,
**dadurch gekennzeichnet,** daß der Abstand zwischen dem dem Kolben (6) zugekehrten Ende des Vorkolbens (10) und dem Kolben (6) dem Verschiebeweg Δx entspricht.

11. Kolben-Zylinder-Anordnung nach einem der Ansprüche 1 bis 10,
**dadurch gekennzeichnet,** daß der Umfangsringspalt (20) in einem Hauptdruckraum (31) auf der dem Vorkolben (10) zugekehrten Seite des Kolbens (6) endet, dessen wirksame Druckfläche wesentlich größer ist als die des Vorkolbens (10).

12. Kolben-Zylinder-Anordnung nach einem der Ansprüche 1 bis 11,
**dadurch gekennzeichnet,** daß der Zylinderansatz an einem Vorhubkolben (40) ausgebildet ist, der im Zylinderrohr (1) verschiebbar geführt ist und auf der von dem Zylinderansatz (8) abgekehrten Seite der Zylinderdeckel (2) im Zylinderrohr (1) befestigt ist, wobei zwischen dem Zylinderdeckel (2) und dem Vorhubkolben (40) ein Vorhub-Druckraum (41) ausgebildet ist, der über eine Bohrung (43) durch den Zylinderdeckel (2) mit einer Anschlußleitung für ein Druckmedium verbunden ist.

13. Kolben-Zylinder-Anordnung nach Anspruch 12,
**dadurch gekennzeichnet,** daß konzentrisch am Zylinderdeckel (2) ein Tauchrohr (44) ausgebildet ist, das umfangsgemäß abgedichtet durch den Vorhubkolben (40) verläuft und in die Innenbohrung (26) der Führungsstange (15) hineinragt, und insbesondere kurz vor dem Bohrungsgrund endet.

14. Kolben-Zylinder-Anordnung nach Anspruch 13,
**dadurch gekennzeichnet,** daß das Tauchrohr (44) mit der Durchgangsbohrung (13) im Zylinderdeckel (2) verbunden ist.
